Europäisches Patentamt

European Patent Office

Office européen des brevets

(19)

(11) Publication number: **0 302 974 B1**

# EUROPEAN PATENT SPECIFICATION

(12)

(45) Date of publication of patent specification: **21.11.91**   (51) Int. Cl.⁵: **G11B 23/04**, G11B 23/50

(21) Application number: **87307162.5**

(22) Date of filing: **13.08.87**

(54) Apparatus for securing a functional block to a cassette tape.

(43) Date of publication of application:
**15.02.89 Bulletin 89/07**

(45) Publication of the grant of the patent:
**21.11.91 Bulletin 91/47**

(84) Designated Contracting States:
**AT BE CH DE ES FR GB GR IT LI LU NL SE**

(56) References cited:
EP-A- 0 020 059      EP-A- 0 078 997
DE-A- 3 314 845      DE-A- 3 434 430
FR-A- 2 389 196      FR-A- 2 536 896
GB-A- 1 552 270      GB-A- 2 103 180
GB-A- 2 140 388      US-A- 3 612 774
US-A- 3 767 210      US-A- 4 150 409

(73) Proprietor: **Che, Ay Chyun**
**No. 1-4, Alley 44 Lane 149 Kuo Ching Road**
**Pan-Chiao**
**Taipei Hsien(TW)**

(72) Inventor: **Che, Ay Chyun**
**No. 1-4, Alley 44 Lane 149 Kuo Ching Road**
**Pan-Chiao**
**Taipei Hsien(TW)**

(74) Representative: **Jackson, Peter Arthur et al**
**Gill Jennings & Every, 53-64 Chancery Lane**
**London WC2A 1HN(GB)**

Rank Xerox (UK) Business Services

## Description

The present invention relates to the fitting of a functional block (e.g. a cleaning pad or a magnet) to a video tape cassette so that it can easily be installed on, and removed from, the cassette.

In general, the commercially available audio or video cassette tapes are re-recorded by using a tape recorder or video recorder. The erasing of the old content recorded in the tape occurs simultaneouly with the recording of the new content. In some cases, it is only desired that the content of the tape be erased. In this condition, the input signal level of the tape recorder or video recorder must be set to zero level, and the record button is depressed to erase the content previously recorded in the tape. However, the speed of such an erasing process is slow. In order to overcome this problem, a tape erasing machine for audio or video tape has been developed. However, since the machine is designed for professional purpose, it is expensive and bulky, and cannot be widely used.

In regeneration or recording period, the magnetic tape of the audio or video tape passes through the magnetic head of a tape recorder or video recorder, and the positive operation surface of the magnetic tape keeps contact with the magnetic head. As used in the specification, the term "positive operation surface" is defined as one of the surfaces of the magnetic tape which contacts the magnetic head in operation, and the term "negative surface" is defined as the other surface opposite to the positive operation surface of the magnetic tape. Therefore, some of the oxides and dusts on the positive operation and negative surfaces of the magnetic tape will accumulate on the magnetic head and in the vicinity of the passing path of the magnetic tape. As a result, the signals are susceptible to distortion, the sound or picture quality is reduced, and the passing path of the magnetic tape may shift. Currently, the method to avoid this problem is to clean the magnetic head with a cleaning liquid or cleaning tape after operating the machine for a period of time. However, such cleaning processes are time-consuming and inconvenient.

US-A-3612774 discloses a compact-type cassette housing having a plurality of windows in the front wall of the housing for receiving an erasing device carrying magnets which are brought into engagement with the magnetic tape for erasing the tape. Since the erasing device may only be received on an exterior wall surface of the cassette housing, it may only be used for the compact cassette types of tape cassette, and, since the erasing device has no elastic means urging the magnet into engagement with the magnetic tape, contact therebetween cannot be ensured. Furthermore, when the erasing device is snapped onto the cassette housing, it obstructs all the apertures through which the tape is exposed to the playing head or heads so that it cannot be used which the tape is being played.

FR-A-2536896 and US-A-3767210 disclose magnetic erasing heads which are permanent fixtures within the cassette housing. GB-A-1552770 discloses an alternative solution to the common problem of removably mounting a cleaning element in a tape cassette. In this case the mounting involves inserting the cleaning device like a key through an opening in one wall of the cassette housing. Engagement of the tape cleaning means and the tape cannot therefore be ensured.

In accordance with the present invention, a video tape cassette has a housing containing a magnetic tape, an outer protective cover hingedly connected to the housing, opening of the cover exposing the tape at the front side of the cassette and a wall part of the housing formed with an opening at a lateral side of the cassette adjacent the front side; and a functional member, which is insertable into the space between the cover and said wall part of the housing and which engages the tape; the functional member comprising an elastic main body which embraces the edge of the wall part adjacent said front side and is formed with at least one clamping member for engagement in the opening in the wall part for releasably attaching the functional member to the wall part when the cover is open; and an elastic securing member which extends from the main body and carries a functional block whereby the functional block is urged by the resilience of the elastic securing member against an operation surface of the magnetic tape without interfering with playing of the tape.

With this arrangement, after the functional member has been installed on the housing, the cassette can be put into a video recorder or fast-forward/fast-rewind machine, and then either after the fast-forward or fast-rewind button has been depressed, or during normal playing, the magnetic tape of the cassette tape will be subjected to cleaning or to erasure of the recorded content of the magnetic tape.

The present invention will be more fully understood from the following detailed description, taken in connection with the accompanying drawings, in which:

Fig. 1 is a perspective view of a cleaning device for VHS video tapes in accordance with the first preferred embodiment of the present invention;

Fig. 2 is a fragmentary cross-sectional view of a VHS video tape with the cleaning device of Fig. 1 installed therein; and,

Fig. 3 is a longitudinal sectional view of a cleaning device in accordance with the second preferred embodiment of the present invention.

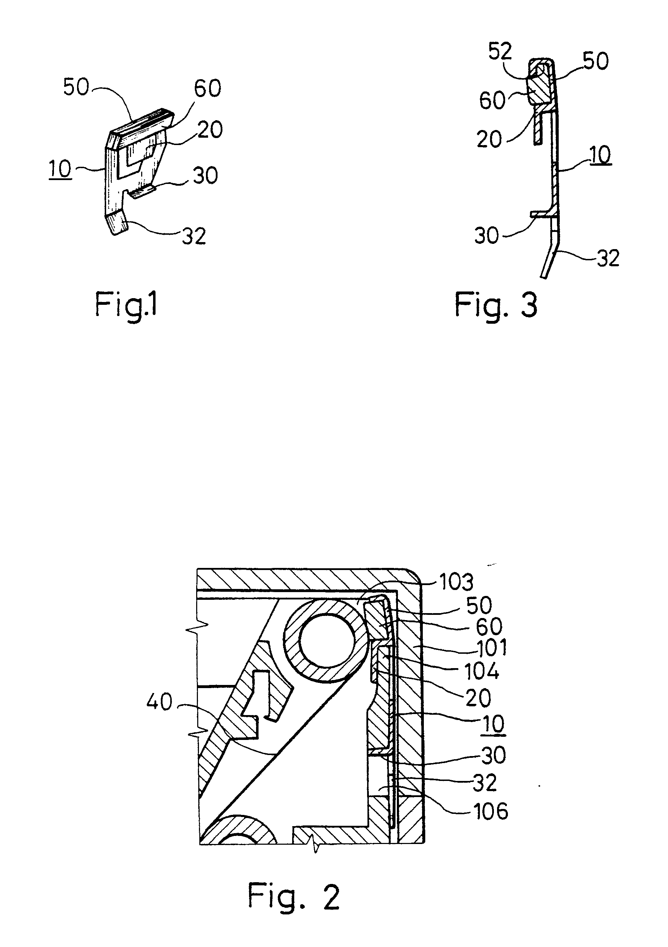

As shown in Figures 1 and 2, a cleaning device for a VHS video tape in accordance with the first embodiment of the present invention includes a main body 10, an elastic member 50 and a cleaning pad 60. The main body 10 includes a first and a second elastic clamping plates 20 and 30. The first elastic clamping plate 20 has a first portion extending outwards from the main body 10 and forming a generally right angle with the main body 10, and a second portion extending downwards from the first portion and forming a generally right angle with the first portion, as shown in Fig. 2. The second elastic clamping plate 30 extends outwards from the main body 10, and forms a generally right angle with the main body 10. The elastic member 50 also extends from the main body 10, and the cleaning pad 60 is adhered on one of the surfaces of the elastic member 50.

Fig. 2 shows a cross-sectional view of the upper right corner of the VHS video tape (viewing from the back of the video tape) at which the cleaning device is suitable to be installed. In the installing operation, the user first opens the magnetic tape protective cover 101 of the VHS video tape, and then inserts the main body 10 into the space between the protective cover 101 and a right plate 104 of the housing for the magnetic tape 40 with the first elastic clamping plate 20 clamping on the right plate 104 and the second elastic clamping plate 30 clamping on the inner wall of an opening 106 provided in the right plate 104. The opening 106 is provided for the video recorder to detect the termination of the magnetic tape. Once the installment of the main body 10 has been finished, the cleaning pad 60 adhered on the elastic member 50 is located in the inner space 103 of the housing, and urged against the positive operation surface of the magnetic tape 40 with a proper pressure provided by the elastic member 50. Thereafter, the magnetic tape 40 will be cleaned rapidly in a fast-forward or fast-rewind process. Also, the magnetic tape can be cleaned in a normal playing process before it passes through the magnetic head.

The cleaning pad 60 may be a felt pad or the like. The elastic member 50 may be provided with a receiving slot 52, as shown in Fig. 3, in accordance with the second preferred embodiment of the present invention. In this condition, the felt pad 60 is shaped so that it can be removably inserted into the receiving slot 52 and firmly reside between the elastic member 50 and the first elastic clamping plate 20 with a portion thereof extending outwards to contact the magnetic tape. Accordingly, when the felt pad 60 becomes dirty, only the felt pad per se, not the main body 10 or the elastic member 50, needs to be changed.

Based on the same main body 10 and elastic member 50 of the present invention, the cleaning pad 60 of Fig. 1 or 3 can be replaced by a magnet to form an erasing device for a magnetic tape. When the magnetic tape 40 passes through the magnet, the magnetic field of the magnet will erase the recorded content in the magnetic tape and return it back to a blank tape.

Although Figs. 1 to 3 and the above description all refers to a cleaning or erasing device for a VHS video tape, it should be understood that the present invention can be applied to other kinds of video tapes and endless tapes, such as BETA video tape, 8 mm video tape, and VHS-C video tape, by appropriately modifying and varying the shapes of the main body and the elastic member.

In the cases of BETA and VHS video tapes, the main body 10 may be provided with a guide member 32 extending downwards therefrom and slightly bending toward the right plate 104 of the housing to facilitate the closing of the protective cover 101 and prevent the cover 101 from being hindered by the main body 10 when the main body 10 is installed thereon.

It should be understood that the main body, the guide member and the elastic member may be integrally formed, or may include a plurality of pieces to simplify and facilitate the manufacturing process. In addition, the main body and the elastic member may be formed by a metal plate or respective proper materials.

It should be understood that the magnet may be shaped in order to erase the content recorded in a single selected track or in several selected tracks of the magnetic tape.

From the above description, it can be readily understood that the manufacturing cost of the present invention is very cheap, that the erasing or cleaning process can be very fast, and that the installment of the erasing or cleaning device can be rapidly and easily achieved by a user.

**Claims**

1. A video tape cassette having a housing containing a magnetic tape (40), an outer protective cover (101) hingedly connected to the housing, opening of the cover exposing the tape at the front side of the cassette and a wall part (104) of the housing formed with an opening (106) at a lateral side of the cassette adjacent the front side; and a functional member, which is insertable into the space between the cover and said wall part of the housing and which engages the tape; the functional member comprising an elastic main body (10) which embraces the edge of the wall part adjacent said front side and is formed with at least one clamping member (30) for engagement in the opening (106) in the wall part for releasably attaching the functional member to the wall part when the cover is open; and an elastic securing member (50) which extends from the main body and carries a functional block (60) whereby the functional block is urged by the resilience of the elastic securing member against an operation surface of the magnetic tape without interfering with playing of the tape .

2. A cassette according to claim 1, wherein the free end of the elastic securing member (50) includes a receiving slot (52) for firmly receiving a portion of the functional block (60).

3. A cassette according to claim 1 or claim 2, wherein the functional block is a cleaning pad.

4. A cassette according to claim 1 or claim 2, wherein the functional block (60) is a magnet.

## Revendications

1. Cassette vidéo comportant un boîtier contenant une bande magnétique (40), un couvercle protecteur externe (101) fixé de manière pivotante au boîtier, l'ouverture du couvercle exposant la bande sur le côté frontal de la cassette et une partie de paroi (104) du boîtier munie d'une ouverture (106) sur un côté latéral de la cassette adjacent au côté frontal, et un élément fonctionnel, qui peut être inséré dans l'espace compris entre le couvercle et ladite partie de paroi du boîtier et qui entre en contact avec la bande, l'élément fonctionnel comprenant un corps principal élastique (10) qui entoure le bord de la partie de paroi adjacent audit côté frontal et qui est muni d'au moins un élément de fixation (30) destiné à pénétrer dans l'ouverture (106) de la partie de paroi pour fixer de manière amovible l'élément fonctionnel à la partie de paroi lorsque le couvercle est ouvert, et un élément de retenue élastique (50) qui s'étend depuis le corps principal et qui porte un bloc fonctionnel (60) de sorte que le bloc fonctionnel est poussé par l'élasticité de l'élément de retenue élastique contre une surface active de la bande magnétique sans interférer avec la reproduction de la bande.

2. Cassette selon la revendication 1, dans laquelle l'extrémité libre de l'élément de retenue élastique (50) comprend une rainure réceptrice (52) destinée à recevoir solidement une partie du bloc fonctionnel (60).

3. Cassette selon la revendication 1 ou la revendication 2, dans laquelle le bloc fonctionnel est un tampon de nettoyage.

4. Cassette selon la revendication 1 ou la revendication 2, dans laquelle le bloc fonctionnel (60) est un aimant.

## Patentansprüche

1. Videobandkassette mit einem ein Magnetband (40) aufnehmenden Gehäuse, mit einem gelenkig mit dem Gehäuse verbundenen äußeren Schutzdeckel (101), wobei durch Öffnen des Deckels das Band an der Vorderseite der Kassette und ein Wandteil (104) des Gehäuses, der mit einer Öffnung (106) an einer seitlichen Seite der Kassette neben der Vorderseite ausgebildet ist, freigelegt werden, und mit einem Funktionselement, das in den Raum zwischen dem Deckel und dem Wandteil des Gehäuses einsetzbar ist und das an dem Band angreift; das Funktionselement umfaßt einen elastischen Hauptkörper (10), der den Rand des Wandteils neben der Vorderseite übergreift und der mit mindestens einem Klemmelement (30) zum Eingriff in die Öffnung (106) in dem Wandteil zur lösbaren Anbringung des Funktionselements an dem Wandteil bei offenem Deckel ausgebildet ist; und das Funktionselement umfaßt ein elastisches Halteelement (50), das sich von dem Hauptkörper erstreckt und einen Funktionsblock (60) trägt, wodurch der Funktionsblock durch die Federkraft des elastischen Halteelements gegen eine Betriebsfläche des Magnetbandes ohne Beeinträchtigung des Bandspiels gedrängt wird.

2. Kassette nach Anspruch 1, wobei das freie Ende des elastischen Halteelements (50) einen Aufnahmeschlitz (52) zur festen Aufnahme eines Teils des Funktionsblockes (60) umfaßt.

3. Kassette nach Anspruch 1 oder 2, wobei der Funktionsblock ein Reinigungspolster ist.

4. Kassette nach Anspruch 1 oder 2, wobei der Funktionsblock (60) ein Magnet ist.

Fig.1

Fig. 3

Fig. 2